Europäisches Patentamt

European Patent Office

Office européen des brevets

(11) Veröffentlichungsnummer: **0 237 755**
**A2**

(12) **EUROPÄISCHE PATENTANMELDUNG**

(21) Anmeldenummer: 87101604.4

(22) Anmeldetag: 06.02.87

(51) Int. Cl.³: **F 02 B 27/02**
**F 02 M 35/10**

(30) Priorität: 13.03.86 DE 3808310

(43) Veröffentlichungstag der Anmeldung:
23.09.87 Patentblatt 87/39

(84) Benannte Vertragsstaaten:
DE FR GB IT

(71) Anmelder: ROBERT BOSCH GMBH
Postfach 50
D-7000 Stuttgart 1(DE)

(72) Erfinder: Pachta-Reyhofen, Dr. Georg
Lerchenstr. 30/7
A-1080 Wien(AT)

(72) Erfinder: Lenz, Prof. Dr. Hans
Rielgasse 14
A-1238 Wien(AT)

(72) Erfinder: Schwarz, Dr. Helmut, Dipl.-Phys.
Gerokstr.39
D-7143 Vaihingen(DE)

(54) Vorrichtung zur stufenlosen Veränderung der Länge des Luftansaugrohres einer Brennkraftmaschine.

(57) Es wird eine Vorrichtung vorgeschlagen, die zur stufenlosen Veränderung der Länge des Luftansaugrohres einer Brennkraftmaschine dient. Die Vorrichtung umfaßt ein feststehendes, als Sammelsaugrohr dienendes Gehäuse (3), in dem ein hohlzylindrischer Drehkörper (23) drehbar angeordnet ist, dessen Innenraum (26) mit dem Luftansaugrohr (2) über eine Verbindungsöffnung (27) verbunden ist. Zwischen dem Mantel (22) des Drehkörpers (23) und der Innenwand (21) des Gehäuses (3) in radialer Richtung und zwischen Dichtwänden (32) in axialer Richtung werden voneinander abgetrennte Strömungskanäle (31) begrenzt, deren wirksame Länge durch die Drehlage einer Auslaßöffnung (29) in der Drehkörperwandung (28) bestimmt wird, die zum Innenraum (26) des Drehkörpers (23) führt. Andererseits mündet jeder Strömungskanal (31) in einer Einlaßöffnung (34) eines zu jedem Zylinder der Brennkraftmaschine führenden Ansaugkanales (4). Durch Verdrehen des Drehkörpers (23) kann die wirksame Länge jedes Strömungskanales (31) Abhängigkeit von der Drehzahl der Brennkraftmaschine bei Vollast geändert werden.

FIG. 2

R. 20480
10.3.1986 Kh/Wl

ROBERT BOSCH GMBH, 7000 Stuttgart 1

## Vorrichtung zur stufenlosen Veränderung der Länge des Luftansaugrohres einer Brennkraftmaschine

### Stand der Technik

Es hat sich gezeigt, daß durch eine sorgfältige Abstimmung der Luftansaugrohrgeometrien bezüglich Durchmesser und Länge die sich ausbildenden Luftschwingungen im Luftansaugrohr derart genützt werden können, daß Nachladeeffekte bei Vollast in bestimmten Drehzahlbereichen erzielt werden können, die zu einem erhöhten Liefergrad und damit auch zu einem erhöhten Drehmoment führen. Bei den heute verwendeten, in ihrer Länge und ihrem Querschnitt unveränderlichen Luftansaugrohren lassen sich diese Nachladeeffekte nur in sehr engen Drehzahlbereichen erzielen. Lange Luftansaugrohre ergeben in der Regel ein hohes Drehmoment im unteren Drehzahlbereich bei Vollast, jedoch ein deutlich geringeres Drehmoment bei hohen Drehzahlen. Bei kurzen Luftansaugrohren verhält es sich umgekehrt. Da genaugenommen jeder Drehzahl bei Vollast eine bestimmte, optimale Luftansaugrohrlänge mit dem maximalen gasdynamischen Nachladeeffekt zugeordnet ist, können diese Luftansaugrohre für die Brennkraftmaschine nur für eine bestimmte Vollastdrehzahl optimal ausgelegt werden.

Die Erfindung geht aus von einer Vorrichtung zur stufenlosen Veränderung der Länge des Luftansaugrohres einer Brennkraftmaschine nach der Gattung des Hauptanspruchs. Es ist schon eine Vorrichtung zur stufenlosen Veränderung der Länge des Luftansaugrohres einer Brennkraftmaschine bekannt, bei der jedoch ein sehr großer Platzbedarf
besteht und Ansteuerungs- und Abdichtprobleme die Wirksamkeit beeinträchtigen.

Vorteile der Erfindung

Die erfindungsgemäße Vorrichtung mit den kennzeichnenden Merkmalen
des Hauptanspruchs hat demgegenüber den Vorteil, daß sie über einen
großen Bereich eine stufenlose Veränderung der Länge des Luftansaugrohres bei geringstmöglichem Platzbedarf und ohne eine Änderung des
Platzbedarfes gewährleistet und leicht steuer- und abdichtbar ist.
Die erfindungsgemäße Vorrichtung ermöglicht während des Fahrbetriebes der Brennkraftmaschine jeder gewünschten Vollastdrehzahl die
entsprechende, optimale Luftansaugrohrlänge kontinuierlich zuzuordnen, so daß sich der maximal mögliche Drehmomentverlauf über dem gesamten Drehzahlbereich ergibt und Unstetigkeiten im Drehmomentverlauf vermieden werden.

Bei Ausführung der Strömungskanäle in Schraubenform können Verdrehwinkel über 360° realisiert wrden, wodurch sich die stufenlos variierbare Saugrohrlänge je nach Anzahl der Schraubenwindungen beliebig
steigern läßt, oder, anders gesehen, es läßt sich für eine vorgegebene Saugrohrlänge der Gehäusedurchmesser und damit der Platzbedarf
der Sauganlage stark reduzieren.

Durch die in den Unteransprüchen aufgeführten Maßnahmen sind vorteilhafte Weiterbildungen und Verbesserungen der im Hauptanspruch
angegebenen Vorrichtung möglich.

So ergibt sich der Vorteil einer leichten Herstellbarkeit, wenn dem
hohlzylindrischen Drehkörper eine kreisförmige Innenwand des Gehäuses zugeordnet wird.

...

R. 20480

Weiterhin vorteilhaft ist es, den Drehkörper und die Innenwand des Gehäuses so exzentrisch zueinander verlaufen zu lassen, daß sich der radiale Abstand zwischen dem Mantel des Drehkörpers und der Innenwand des Gehäuses vergrößert, je mehr sich die Einlaßöffnungen im Mantel den Auslaßöffnungen der Ansaugkanäle nähern. Hierdurch läßt sich zusätzlich zur Länge auch der Querschnitt der Strömungskanäle verändern, wodurch sich eine noch genauere Anpassung an die Drehzahl bei Vollast ergibt.

Vorteilhaft ist es, den Drehkörper durch einen Stellmotor in Abhängigkeit von Betriebskenngrößen der Brennkraftmaschine zu verdrehen.

Ein weiterer Vorteil besteht in der Möglichkeit, in dem Innenraum des Drehkörpers ein Luftfilter und/oder ein Luftmeßorgan anzuordnen, so daß sich der Platzbedarf für das gesamte Luftansaugsystem vermindert.

Zeichnung

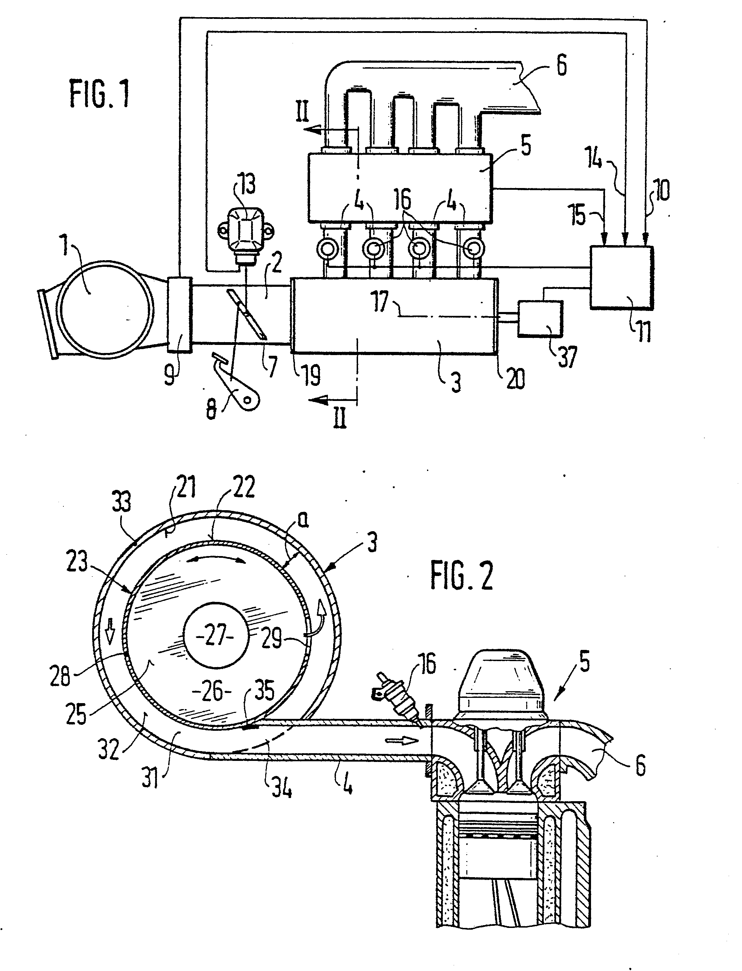

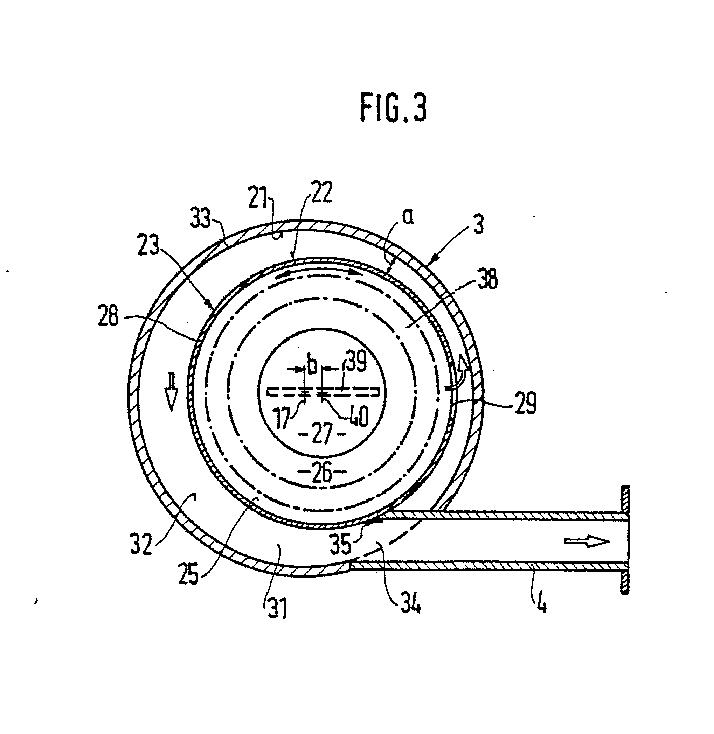

Ausführungsbeispiele der Erfindung sind in der Zeichnung vereinfacht dargestellt und in der nachfolgenden Beschreibung näher erläutert. Es zeigen Figur 1 ein erstes Ausführungsbeispiel einer erfindungsgemäßen Vorrichtung zur stufenlosen Veränderung der Länge des Luftansaugrohres einer Brennkraftmaschine, Figur 2 einen Schnitt entlang der Linie II-II in Figur 1, Figur 3 ein zweites Ausführungsbeispiel einer erfindungsgemäßen Vorrichtung zur stufenlosen Veränderung der Länge des Luftansaugrohres einer Brennkraftmaschine im Querschnitt.

Beschreibung der Ausführungsbeispiele

Das erste Ausführungsbeispiel einer erfindungsgemäßen Vorrichtung zur stufenlosen Veränderung der Länge des Luftansaugrohres einer Brennkraftmaschine nach den Figuren 1 und 2 wird anhand einer gemischverdichtenden fremdgezündeten Brennkraftmaschine erläutert. Da-

...

bei führt von einem Luftfilter 1 ein Luftansaugrohr 2 zu einem Sammelsaugrohr mit einem Gehäuse 3. Vom Gehäuse 3 führt je ein Ansaugkanal 4 zu je einem Zylinder einer gemischverdichtenden fremdgezündeten Brennkraftmaschine 5. Die Auslässe der Zylinder der Brennkraftmaschine 5 sind mit einem Abgasrohr 6 verbunden. Im Luftansaugrohr 2 ist eine Drosselklappe 7 angeordnet, die durch ein sogenanntes Gaspedal 8 betätigbar ist. Zwischen dem Luftfilter 1 und der Drosselklappe 7 ist im Luftansaugrohr 2 ein Luftmeßorgan 9 angeordnet, das zur Ermittlung der von der Brennkraftmaschine angesaugten Luftmenge dient. Das Luftmeßorgan 9 kann beispielsweise als Stauklappe, Hitzdraht, Heißfilm oder anders augebildet sein. Der durch das Luftmeßorgan 9 ermittelte Wert der angesaugten Luftmenge wird in Form eines elektrischen Signals 10 in ein elektronisches Steuergerät 11 eingeben. Die Winkellage der Drosselklappe 7 im Luftansaugrohr 2 wird durch einen sogenannten Drosselklappengeber 13 ermittelt und als elektrisches Signal 14 dem elektronischen Steuergerät 11 eingegeben. Ein nicht dargestellter Drehzahlgeber ermittelt die Drehzahl der Brennkraftmaschine, die als elektrischer Wert 15 dem elektronischen Steuergerät 11 eingebbar ist. Die Drehzahl kann auch in nicht dargestellter Weise anhand der Zündimpulse ermittelt werden. In jedem Ansaugkanal 4 ist in unmittelbarer Nähe der Zylinder der Brennkraftmaschine 5 je ein elektromagnetisch betätigbares Kraftstoffeinspritzventil 16 bekannter Bauart angeordnet. Die elektromagnetisch betätigbaren Kraftstoffeinspritzventile 16 sind durch das elektronische Steuergerät 11 in Abhängigkeit von den dem elektronischen Steuergerät 11 zugeführten Betriebskenngrößen der Brennkraftmaschine 5 wie Temperatur, Luftansaugmenge, Drehzahl, Drosselklappenstellung und anderen ansteuerbar. Anstelle der elektromagnisch betätigbaren Kraftstoffeinspritzventile 16 können ebenfalls selbsttätig hydraulisch öffnende Kraftstoffeinspritzventile einer sogenannten mechanischen Kraftstoffeinspritzanlage angeordnet sein.

Das als Sammelsaugrohr dienende Gehäuse 3 ist an der Brennkraftmaschine 5 oder im Motorraum eines Kraftfahrzeuges stationär befe-

...

stigt und ist an seinen Stirnflächen quer zur Längsachse 17 dicht
verschlossen, beispielsweise an seiner dem Luftansaugrohr 2 zugewandten Stirnfläche durch einen Deckel 19 und an seiner gegenüberliegenden Stirnfläche durch einen Deckel 20. Axial nebeneinander
liegend zweigen entlang der Längsachse 17 von dem Gehäuse 3 die Ansaugkanäle 4 zu den einzelnen Zylindern der Brennkraftmaschine 5 ab.
Vorzugsweise ist das Gehäuse 3 zylindrisch ausgebildet, mit einer
kreisförmigen Innenwand 21. In dem Gehäuse 3 ist ein hohlzylindrischer Drehkörper 23 konzentrisch zur Längsachse 17 drehbar gelagert.
Der hohlzylindrische Drehkörper 23 befindet sich mit einem radialen
Abstand a zwischen seinem Mantel 22 und der Innenwand 21 des Gehäuses 3 innerhalb des Gehäuses 3. Der Drehkörper 23 kann quer zur
Längsachse 17 an seinen Stirnflächen verschlossen sein, beispielsweise an seiner dem Luftansaugrohr 2 zugewandten Stirnfläche durch
einen Deckel 25. Der Deckel 25 kannjedoch auch fest mit dem Gehäuse
3 verbunden sein, dadurch entfiele die Drehbewegung zwischen Deckel
25 und Luftansaugrohr 2. Der Drehkörper 23 umschließt einen Innenraum 26, der über eine Verbindungsöffnung 27 mit dem Luftansaugrohr
2 verbunden ist. In gleichem axialem Abstand wie die einzelnen Ansaugkanäle 4 zueinander sind in der rohrförmigen Wandung 28 des
Drehkörpers 23 vom Innenraum 26 zum Mantel 22 führende Auslaßöffnungen 29 vorgesehen, so daß jedem Ansaugkanal 4 eines Zylinders der
Brennkraftmaschine eine Auslaßöffnung 29 zugeordnet ist. Jede Auslaßöffnung 29 mündet dabei am Mantel 22 des Drehkörpers 23 in einem
Strömungskanal 31, der nur jeweils einem Ansaugkanal 4 zugeordnet
ist und in radialer Richtung durch den Mantel 22 des Drehkörpers 23
beziehungsweise die Innenwand 21 des Gehäuses 3 begrenzt wird, während die axiale Begrenzung zum benachbarten Strömungskanal durch
zwischen den Strömungskanälen 31 angeordnete Dichtwände 32 erfolgt,
die sich radial zwischen dem Mantel 22 des Drehkörpers 23 und der
Innenwand 21 des Gehäuses 3 erstrecken. Den Zylindern der Brennkraftmaschine 5 zugewandt ragen die Ansaugkanäle 4 zumindest teilweise so weit durch die Gehäusewandung 33 des Gehäuses 3, daß ihre

...

den Zylindern abgewandten Einlaßöffnungen 34 jeweils zu einem der Strömungskanäle 31 hin offen sind, also eine Strömungsverbindung zwischen je einem der Strömungskanäle 31 und einem der Ansaugkanäle 4 hergestellt wird. Dichtlippen 35 zwischen dem Mantel 22 des Drehkörpers 23 sowie den Dichtwänden 32 und den Ansaugkanälen 4 gewährleisten einen dichten Abschluß, so daß jeder Strömungskanal 31 an einer Einlaßöffnung 34 eines Ansaugkanales 4 endet. Bei dem in Figur 2 dargestellten Ausführungsbeispiel hat jeder Strömungskanal 31 über seine gesamte Länge von der Auslaßöffnung 29 bis zur Einlaßöffnung 34 einen gleichbleibenden Querschnitt. Die Länge jedes wirksamen Strömungskanales 31 zwischen jeder Auslaßöffnung 29 am Drehkörper 23 und jeder Einlaßöffnung 34 bestimmt sich jeweils aus der Drehstellung des Drehkörpers 23 gegenüber dem Gehäuse 3. Bei dem in Figur 2 dargestellten Ausführungsbeispiel verringert sich die Länge jedes Strömungskanales 31 bei einer Drehbewegung des Drehkörpers 23 entgegen dem Uhrzeigersinn und verlängert sich bei einer Drehbewegung des Drehkörpers 23 im Uhrzeigersinn. Der Drehkörper 23 ist vorteilhafterweise in Abhängigkeit von Betriebskenngrößen der Brennkraftmaschine zur Änderung der Luftsäule des Luftansaugrohres verdrehbar. Hierzu kann ein an sich bekannter Stellmotor 37 dienen, der in nicht dargestellter Weise, beispielsweise direkt oder durch ein Zahnradgetriebe, den Drehkörper 23 verdreht. Der Stellmotor 37 kann pneumatisch in Abhängigkeit vom Saugrohrdruck oder, wie dargestellt, elektromagnetisch arbeiten und durch das elektronische Steuergerät 11 angesteuert werden. Zur Erzielung eines optimalen Drehmomentverlaufes über den gesamten Drehzahlbereich der Brennkraftmaschine wird dabei vorzugsweise der Stellmotor 37 derart durch das elektronische Steuergerät 11 in Abhängigkeit von der Drosselklappenstellung 14 und der Drehzahl 15 angesteuert, daß er bei Vollastbetrieb der Brennkraftmaschine im unteren Drehzahlbereich den Drehkörper 23 in eine Stellung verdreht, in der sich zwischen der Auslaßöffnung 29 des Drehkörpers 23 und der Einlaßöffnung 34 ein langer Strömungskanal 31 für jeden Zylinder ergibt, während er bei hohen Drehzahlen den Dreh-

...

körper 23 entgegen dem Uhrzeigersinn verdreht, so daß die Auslaßöffnung 29 in Drehrichtung näher zur Einlaßöffnung 34 jedes Ansaugkanales 4 gelangt und damit der wirksame Strömungskanal 31 zwischen jeder Auslaßöffnung 29 und jeder Einlaßöffnung 34 verkürzt wird. Hierdurch verändert sich die Länge der zu jedem der Zylinder der Brennkraftmaschine führenden Luftsäule, ohne daß sich die äußeren Abmessungen des Luftansaugsystems verändern. Optimale Drehmomente der Brennkraftmaschine ergeben sich bei Vollast im unteren Drehzahlbereich für lange Luftansaugrohre und bei hohen Drehzahlen mit kurzen Luftansaugrohren.

Bei dem zweiten Ausführungsbeispiel der Erfindung nach Figur 3 sind die gegenüber dem Ausführungsbeispiel nach den Figuren 1 und 2 gleichbleibenden und gleichwirkenden Teile durch die gleichen Bezugszeichen gekennzeichnet. Im Gegensatz zu dem Ausführungsbeispiel nach den Figuren 1 und 2 sind bei dem Ausführungsbeispiel nach Figur 3 Gehäuse 3 und Drehkörper 23 nicht koaxial zueinander angeordnet sondern exzentrisch zueinander, so daß ihre Längsachsen 17, 40 zwar auf der gleichen Höhe liegen, aber einen Abstand b zueinander haben, so daß sich der radiale Abstand a zwischen dem Mantel 22 des Drehkörpers 23 und der Innenwand 21 des Gehäuses 3 über die Länge jedes Strömungskanales 31 ändert und zwar derart, daß sich der radiale Abstand a in Drehrichtung gegen den Uhrzeigersinn vergrößert, wodurch sich mit verkürzendem Strömungskanal 31 eine Querschnittsvergrößerung des Strömungskanales 31 ergibt. Dieser Querschnittsverlauf des Strömungskanales 31 als Funktion der Länge des Strömungskanales ist durchaus erwünscht und vorteilhaft, da sich eine Drehmomentverbesserung im unteren Drehzahlbereich der Vollast für lange Luftansaugrohre mit kleinen Querschnitten und bei hohen Drehzahlen für kurze Luftansaugrohre mit großen Querschnitten ergibt.

Bei dem Ausführungsbeispiel nach Figur 3 ist strichpunktiert mit 38 ein Luftfilter dargestellt, der anstelle des Luftfilters 1 in Figur 1 sowohl beim ersten als auch beim zweiten Ausführungsbeispiel im Innenraum 26 des Drehkörpers 23 angeordnet sein kann. Ebenfalls im Innenraum 26 des Drehkörpers 23 kann ein Luftmeßorgan 39, beispielsweise in Form eines bekannten Heißfilmluftmassenmessers, angeordnet sein, das gestrichelt dargestellt ist und das Luftmeßorgan 9 nach Figur 1 ersetzt. Die Anordnung eines Luftfilters 38 und/oder eines Luftmeßorgans 39 innerhalb des Drehkörpers 23 führt zu einer Verringerung des Platzbedarfes des gesamten Ansaugsystemes der Brennkraftmaschine.Die erfindungsgemäßen Vorrichtungen nach den Figuren 2 und 3 sind ebenfalls in dem Luftansaugsystem einer Diesel-Brennkraftmaschine in äquivalenter Weise einsetzbar, wobei natürlich das in Figur 2 gezeigte elektromagnetisch betätigte Kraftstofeinspritzventil 16 fortfällt.

R. 20480

10.3.1986 Kh/Wl

ROBERT BOSCH GMBH, 7000 Stuttgart 1

Ansprüche

1. Vorrichtung zur stufenlosen Veränderung der Länge des Luftansaugrohres einer Brennkraftmaschine, mit von einem Sammelsaugrohr abzweigenden und zu jedem Zylinder der Brennkraftmaschine führenden
einzelnen Ansaugkanälen, dadurch gekennzeichnet, daß das Sammelsaugrohr durch ein Gehäuse (3) gebildet wird, in dem ein hohlzylindrischer Drehkörper (23), dessen Innenraum (26) mit dem Luftansaugrohr
(2) verbunden ist, so um seine Längsachse (17, 40) drehbar gelagert
ist, daß zwischen dem Mantel (22) des Drehkörpers (23) und der Innenwand (21) des Gehäuses (3) ein radialer Abstand (a) unter Bildung
von axial nebeneinander angeordneten gegebenenfalls auch schraubenförmig velraufenden Strömungskanälen (31) besteht und jeder Strömungskanal (31) einerseits über eine zugeordnete Auslaßöffnung (29)
im Mantel (22) des Drehkörpers (23) mit dem Innenraum (26) des Drehkörpers (23) und andererseits mit einer Einlaßöffnung (34) eines der
zu den Zylindern führenden Ansaugkanäle (4) verbunden und gegenüber
jedem benachbarten Strömungskanal (31) abgedichtet ist, so daß durch
Verdrehen des Drehkörpers (23) die zwischen den Auslaßöffnungen (29)
im Mantel (22) des Drehkörpers (23) und den Einlaßöffnungen (34) der
Ansaugkanäle (4) gebildeten Strömungskanäle (31) in ihrer Länge veränderbar sind.

2. Vorrichtung nach Anspruch 1, dadurch gekennzeichnet, daß die Innenwand (21) des Gehäuses (23) kreisförmig ausgebildet ist.

...

3. Vorrichtung nach Anspruch 1 oder 2, dadurch gekennzeichnet, daß der Drehkörper (3) und die Innenwand (21) des Gehäuses (3) so exzentrisch zueinander verlaufen, daß sich der radiale Abstand (a) zwischen dem Mantel (22) des Drehkörpers (23) und der Innenwand (21) des Gehäuses (3) vergrößert, je mehr sich die Auslaßöffnungen (29) im Mantel (22) den Einlaßöffnungen (34) der Ansaugkanäle (4) nähern.

4. Vorrichtung nach einem der vorhergehenden Ansprüche, dadurch gekennzeichnet, daß der Drehkörper (23) durch einen Stellmotor (37) in Abhängigkeit von Betriebskenngrößen (10, 14, 15) der Brennkraftmaschine (5) verdrehbar ist.

5. Vorrichtung nach Anspruch 1, dadurch gekennzeichnet, daß im Innenraum (26) des Drehkörpers (23) ein Luftfilter (38) angeordnet ist.

6. Vorrichtung nach Anspruch 1, dadurch gekennzeichnet, daß im Innenraum (26) des Drehkörpers (23) ein Luftmeßorgan (39) angeordnet ist.

FIG.1

FIG.2

0237755

# FIG.3